# EUROPEAN PATENT SPECIFICATION

(11) **EP 3 376 066 B1**
(45) Date of publication and mention of the grant of the patent: **07.10.2020**
(21) Application number: 16864241.1
(22) Date of filing: 09.11.2016
(51) Int. Cl.: F16H 3/091, F16H 3/66, F16H 3/097, F16H 3/00

(54) **DUAL-CLUTCH TRANSMISSION**
DOPPELKUPPLUNGSGETRIEBE
TRANSMISSION À DOUBLE EMBRAYAGE

(30) Priority: 12.11.2015 JP 2015222047
(43) Date of publication of application: 19.09.2018
(73) Proprietor: Isuzu Motors Limited, Tokyo 140-8722 (JP)
(72) Inventor: UJI, Hidetoshi, Fujisawa-shi Kanagawa 252-0881 (JP)
(74) Representative: Miller Sturt Kenyon
(86) International application number: PCT/JP2016/083188
(87) International publication number: WO 2017/082280

(56) References cited:
- EP-A1- 2 685 135
- EP-A2- 2 075 487
- JP-A- 2003 113 911
- JP-A- 2008 530 456
- JP-A- 2010 535 990
- JP-A- 2015 166 603
- US-A- 5 651 289

## Description

### Technical Field

The present disclosure relates to a dual-clutch transmission.

### Background Art

Conventionally, dual-clutch transmissions have been put to practical use, in which a dual-clutch device having two clutches is provided between an engine and a transmission and thus transmitting power from the engine to the transmission can be switched between two lines (e.g., see Patent Document 1).

In such dual-clutch transmissions, for example, when upshifting from a first gear-shift stage to a second gear-shift stage, only clutch change is performed while a 1/2 stage gear is synchronously joined, whereas when upshifting from the second gear-shift stage to a third gear-shift stage, clutch change is performed, and at the same time the 1/2 stage gear is disconnected and a 3/4 stage gear is synchronously joined.

### Citation List

### Patent Document

Patent Document 1: JP-A-2013-245818

EP 2 075 487 describes a dual clutch transmission, which includes odd-numbered forward traveling speed drive trains to be activated by engaging a first clutch, even-numbered forward traveling speed drive trains to be activated by engaging a second clutch, and a plurality of backward traveling speed drive trains including at least one backward traveling train to be activated by engaging either the first or second clutch. While a reverse mode is set and when a reverser operation means is shifted between a forward traveling position and a backward traveling position, the first and second clutches are alternately engaged/disengaged for a forward/backward traveling speed shift between a backward traveling speed set by at least one backward traveling speed drive train and a forward traveling speed set by any one forward traveling speed drive train activated by engaging the first or second clutch which is different from the first or second clutch adapted to be engaged for activating the at least one backward traveling speed drive train.

### Summary of the Invention

### Problem that the Invention is to Solve

In general, in the dual-clutch transmissions, a gear ratio of a splitter is set such that step ratios upon gear shifts (ratios of increase in gear ratio upon upshifting a gear-shift stage by one stage) are approximately the same. Therefore, a time required for gear shifts performed by both clutch change and gear change is longer than a time required for gear shifts performed by only clutch change due to an influence of rotational synchronous joining. There is a problem that a sense of incompatibility is given to a driver, thereby worsening the gear-shift feeling.

An object of the technique of the present disclosure is to suppress unevenness in time required for gear shifts, thereby effectively reducing a sense of incompatibility, which would have been given to a driver.

### Means for Solving the Problems

An aspect of the invention provides a dual-clutch transmission in accordance with Claim 1.

Preferably, an interstage ratio obtained by dividing a gear ratio of the first primary gear train by a gear ratio of the second primary gear train is set to be larger than an interstage ratio which causes step ratios upon gear shifts to become the same.

### Effects of the Invention

According to the technique of the present disclosure, it is possible to suppress unevenness in time required for gear shifts, thereby effectively reducing a sense of incompatibility, which would have been given to a driver.

### Brief Description of Drawings

Fig. 1 is a schematic overall configuration diagram showing a dual-clutch automatic transmission according to one embodiment of the present disclosure.
Fig. 2 is a view explaining upshifting depending on a vehicle speed and a rotation speed of an engine by a dual-clutch automatic transmission according to a first embodiment of the present disclosure.
Fig. 3 is a view explaining upshifting depending on a vehicle speed and a rotation speed of an engine by a dual-clutch automatic transmission according to a conventional example.

### Mode for Carrying Out the Invention

Hereinafter, a dual-clutch automatic transmission according to one embodiment of the present disclosure will be described with reference to the accompanying drawings. The same components are designated by the same reference numerals, and the names and functions thereof are the same. Therefore, the detailed descriptions thereof will be not repeated.

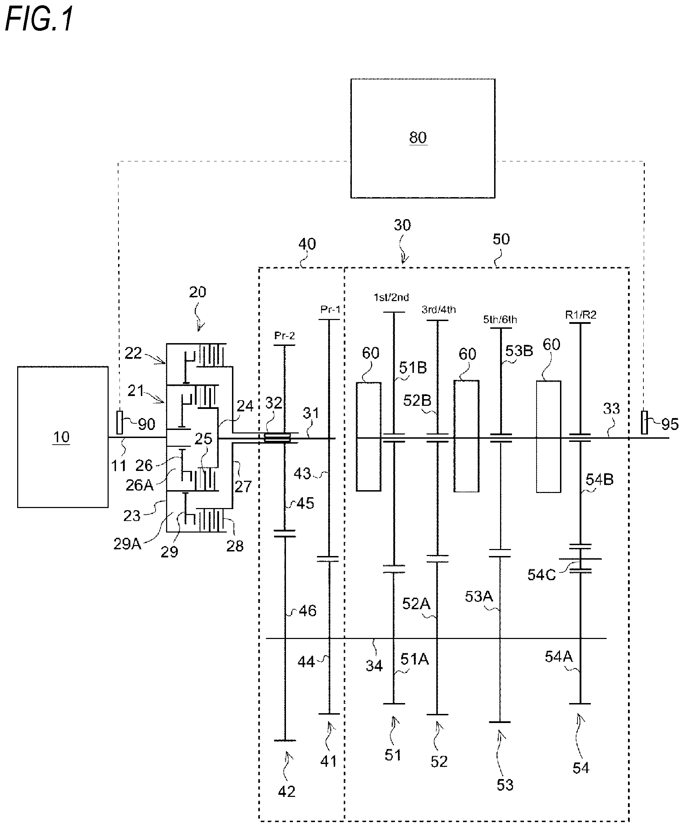

Fig. 1 is a schematic overall configuration diagram showing a dual-clutch automatic transmission according to the present embodiment. In Fig. 1, a reference numeral 10 refers to an engine, which is a driving source, a reference numeral 80 refers to a control unit, a reference numeral 90 refers to a sensor of the rotation speed of the engine, and a reference numeral 95 refers to a vehicle speed sensor.

The dual-clutch automatic transmission includes a dual-clutch device 20 having a first and second clutches 21, 22, and a transmission mechanism 30.

The first clutch 21 is, for example, a wet multi-plate clutch and includes a clutch hub 23 integrally rotating with an output shaft 11 of an engine 10, a first clutch drum 24 integrally rotating with a first input shaft 31 of the transmission mechanism 30, a plurality of first clutch plates 25, a first piston 26 for pressing the first clutch plates 25 against each other, and a first hydraulic pressure chamber 26A.

If the first piston 26 is stroked toward an output side (in a right direction in Fig. 1) by an hydraulic pressure supplied to the first hydraulic pressure chamber 26A, the first clutch plates 25 are pressed against each other and thus the first clutch 21 becomes a connecting state where the first clutch 21 transmits a torque. On the other hand, if the hydraulic pressure of the first hydraulic pressure chamber 26A is released, the first piston 26 is stroked toward an input side (in a left direction in Fig. 1) by an urging force of a spring (not shown), and the first clutch 21 becomes a disconnecting state where the first clutch 21 blocks a power transmission.

The second clutch 22 is, for example, a wet multi-plate clutch and includes a clutch hub 23; a second clutch drum 27 integrally rotating with a second input shaft 32 of the transmission mechanism 30; a plurality of second clutch plates 28; a second piston 29 for pressing the second clutch plates 28 against each other; and a second hydraulic pressure chamber 29A.

If the second piston 29 is stroked toward the output side (in the right direction in Fig. 1) by an hydraulic pressure supplied to the second hydraulic pressure chamber 29A, the second clutch plates 28 are pressed against each other and thus the second clutch 22 becomes a connecting state where the second clutch 22 transmits a torque. On the other hand, if the hydraulic pressure is released, the second piston 29 is stroked toward the input side (in the left direction in Fig. 1) by an urging force of a spring (not shown), the second clutch 22 becomes a disconnecting state where the second clutch 22 blocks a power transmission.

The transmission mechanism 30 includes a subsidiary transmission 40 arranged on the input side and a main transmission 50 arranged on the output side. Also, the transmission mechanism 30 includes first and second input shafts 31, 32 provided in the subsidiary transmission 40, an output shaft 33 provided in the main transmission 50, and a subsidiary shaft 34 arranged parallel to the shafts 31 to 33. The first input shaft 31 is relatively rotatably inserted in a hollow shaft extending through the second input shaft 32 in an axial direction thereof. An output end of the output shaft 33 is connected to a propeller shaft, which is connected to vehicle driving wheels via a differential device and the like (all not shown).

The subsidiary transmission 40 is provided with a first primary gear train 41 for low speed and a second primary gear train 42 for high speed. The first primary gear train 41 has a first input main gear 43 fixed on the first input shaft 31, and a first input subsidiary gear 44 fixed on the subsidiary shaft 34 and normally engaged with the first input main gear 43. The second primary gear train 42 has a second input main gear 45 fixed on the second input shaft 32, and a second input subsidiary gear 46 fixed on the subsidiary shaft 34 and normally engaged with the second input main gear 45. Setting of gear ratios of the first and second primary gear trains 41, 42 will be described later.

The main transmission 50 is provided with a 1/2 stage gear train 51, a 3/4 stage gear train 52, a 5/6 stage gear train 53 and a reverse gear train 54, which correspond to respective gear-shift stages, and also provided with a plurality of synchronization mechanisms 60 for selectively synchronously joining these gear-shifting gear trains 51 to 54 with the output shaft 33.

The 1/2 stage gear train 51 has a 1/2 stage subsidiary gear 51A fixed on the subsidiary shaft 34, and a 1/2 stage main gear 51B relatively rotatably provided on the output shaft 33 and normally engaged with the 1/2 stage subsidiary gear 51A.

The 3/4 stage gear train 52 has a 3/4 stage subsidiary gear 52A fixed on the subsidiary shaft 34, and a 3/4 stage main gear 52B relatively rotatably provided on the output shaft 33 and normally engaged with the 3/4 stage subsidiary gear 52A.

The 5/6 stage gear train 53 has a 5/6 stage subsidiary gear 53A fixed on the subsidiary shaft 34, and a 5/6 stage main gear 53B relatively rotatably provided on the output shaft 33 and normally engaged with the 5/6 stage subsidiary gear 53A.

The reverse gear train 54 has a reverse subsidiary gear 54A fixed on the subsidiary shaft 34, a reverse main gear 54B relatively rotatably provided on the output shaft 33, and an idler gear 54C normally engaged with the gears 55A, 55B.

Each of the synchronization mechanisms 60 has a known structure and includes a synchronization sleeve, a synchronization ring and the like (all not shown). Operation of each of the synchronization mechanisms 60 is controlled by a control unit 80 depending on the rotation speed of the engine, a vehicle speed and the like, thereby selectively synchronously joining the output shaft 33 with each of the gear-shift main gears 51B to 54B.

Next, the detailed setting of gear ratios of the dual-clutch automatic transmission according to the present embodiment will be described. Numerical values used in the following description are examples of the present embodiment and thus can be properly set to optimal values within a range without departing from the scope of the present invention.

One example of the numbers of gear teeth and gear ratios of the gear trains of the present embodiment are shown in the following Table 1, and final gear ratios of gear-shift stages 1 to 6 and step ratios upon gear shifts thereof are shown in the following Table 2. The numbers of gear teeth and gear ratios of gear trains of a conventional example are shown in the following Table 3, and final gear ratios of gear-shift stages 1 to 6 and step ratios upon gear shifts thereof are shown in the following Table 4. In Tables 1 and 3, the numbers of teeth Z 1 represent the numbers of teeth of gears provided on the subsidiary shaft, and the numbers of teeth Z2 represent the numbers of teeth of gears provided on the input shaft or the output shaft.

**[Table 1]**

| | First Primary | Second Primary | 1st/2nd | 3rd/4th | 5th/6th |
|---|---|---|---|---|---|
| The Number of Teeth Z1 | 28 | 35 | 13 | 21 | 38 |
| The Number of Teeth Z2 | 45 | 38 | 43 | 37 | 35 |
| Gear Ratio | 1.61 | 1.09 | 3.31 | 1.76 | 0.92 |

**[Table 2]**

| | 1st | | 2nd | | 3rd | | 4th | | 5th | | 6th | |
|---|---|---|---|---|---|---|---|---|---|---|---|---|
| Transmission Ratio | 5.32 | | 3.59 | | 2.83 | | 1.91 | | 1.48 | | 1.00 | |
| Step Ratio | | 1.48 | | 1.27 | | 1.48 | | 1.29 | | 1.48 | | |

**[Table 3]**

| | First Primary | Second Primary | 1st/2nd | 3rd/4th | 5th/6th |
|---|---|---|---|---|---|
| The Number of Teeth Z1 | 28 | 34 | 13 | 21 | 38 |
| The Number of Teeth Z2 | 45 | 39 | 43 | 37 | 35 |
| Gear Ratio | 1.61 | 1.15 | 3.31 | 1.76 | 0.92 |

**[Table 4]**

| | 1st | | 2nd | | 3rd | | 4th | | 5th | | 6th | |
|---|---|---|---|---|---|---|---|---|---|---|---|---|
| Transmission ratio | 5.32 | | 3.79 | | 2.83 | | 2.02 | | 1.48 | | 1.06 | |
| Step ratio | | 1.48 | | 1.34 | | 1.40 | | 1.37 | | 1.40 | | |

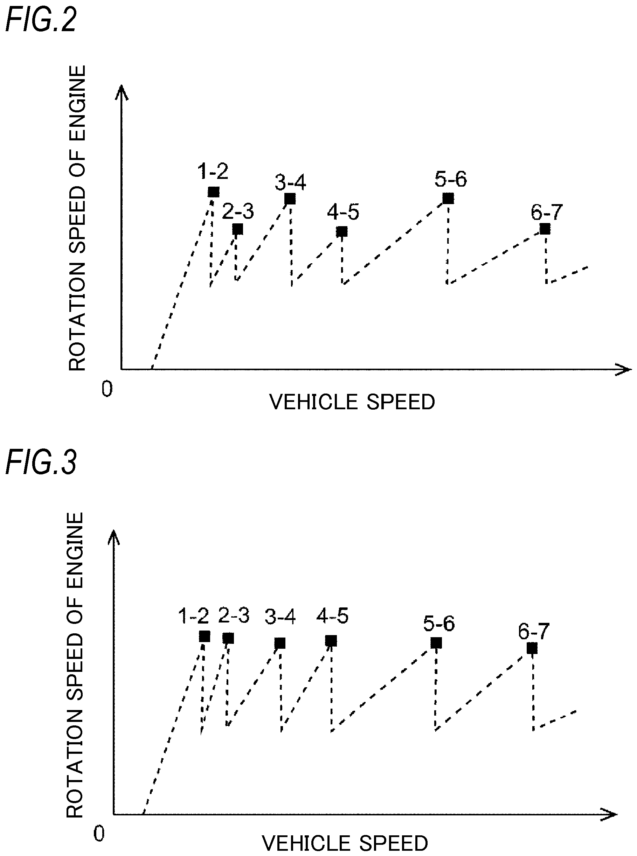

In the conventional example shown in Tables 3 and 4, an interstage ratio of the subsidiary transmission obtained by dividing a gear ratio of the first primary gear train by a gear ratio of the second primary gear train is approximately 1.40 (=1.61/1.15). If the interstage ratio of the subsidiary transmission is set to such a value, the step ratios upon gear shifts are set to have approximately the same and equal intervals as shown in Table 4. Also, as shown in Fig. 3, differences in the number of revolutions between the input side and the output side upon upshifting are approximately the same between gear shifts from the odd-numbered stage to the even-numbered stage (1st → 2nd, 3rd → 4th, 5th → 6th), which are performed by only clutch change, and gear shifts from the even-numbered stage to the odd-numbered stage (2nd → 3rd, 4th → 5th), which are performed by both clutch change and gear change.

As a result, in the conventional example, a time required for gear shifts performed by both clutch change and gear change is longer than a time required for gear shifts performed by only clutch change due to an influence of rotational synchronous joining. There is a problem that a sense of incompatibility is given to a driver, thereby worsening the gear-shift feeling.

On the other hand, in the present embodiment shown in Tables 1 and 2, the interstage ratio of the subsidiary transmission is set to approximately 1.48(=1.61/1.09), which is greater than the interstage ratio in the above conventional example. If the interstage ratio of the subsidiary transmission is set to such a value, step ratios upon gear shifts from the odd-numbered stage to the even-numbered stage (1st → 2nd, 3rd → 4th, 5th → 6th), which are performed by only clutch change, are set to be smaller than steps ratios upon gear shifts from the even-numbered stage to the odd-numbered stage (2nd → 3rd, 4th → 5th), which are performed by both clutch change and gear change.

As a result, as shown in Fig. 2, differences in the number of revolutions between the input side and the output shaft upon upshifting are suppressed such that differences in the number of revolutions upon gear shifts from the even-numbered stage to the odd-numbered stage (2nd → 3rd, 4th → 5th), which are performed by both clutch change and gear change, are smaller than differences in the number of revolutions upon gear shifts from the odd-numbered stage to the even-numbered stage (1st → 2nd, 3rd → 4th, 5th → 6th), which are performed by only clutch change, thereby reducing a time required for synchronous joining. That is, a time required for gear shifts performed by both clutch change and gear change becomes shorter than that of the conventional example, so as to be approximately the same as a time required for gear shifts performed by only clutch change, thereby effectively reducing a sense of incompatibility, which would have been given to a driver upon upshifting.

As described in detail in the foregoing, the interstage ratio of the subsidiary transmission in the present embodiment is set to be larger than that of the conventional example, in which the step ratios upon gear shifts are approximately the same, so that step ratios upon gear shifts performed by both clutch change and gear change are set to be smaller than step ratios upon gear shifts performed by only clutch change. As a result, differences in the number of revolutions between the input side and the output side upon upshifting are suppressed such that differences in the number of revolutions upon gear shifts performed by both clutch change and gear change are smaller than differences in the number of revolutions upon gear shifts performed by only clutch change, thereby reducing a time required for synchronous joining upon gear change. Therefore, the time required for gear shifts performed by only clutch change and the time required for gear shifts performed by both clutch change and gear change are approximately the same, so that unevenness in time required for gear shifts is suppressed, thereby effectively reducing a sense of incompatibility, which would have been given to a driver upon upshifting, and thus reliably enhancing the gear-shift feeling.

The present invention is not limited to the foregoing embodiments, and accordingly, appropriate changes can be made thereto without departing from the scope of the present invention.

For example, setting of gear ratios is not limited to the foregoing embodiments, but the gear ratios may be properly set to optimal values within a range, in which step ratios upon gear shifts performed by both clutch change and gear change is small relative to step ratios upon gear shifts performed by only clutch change.

Also, arrangement of gears, the number of gear-shift stages and the like are not limited to the shown example, but the present invention can be widely applied to dual-clutch transmissions having any other arrangements and numbers of gear-shift stages.

### Industrial Applicability

The dual-clutch transmission according to the present disclosure exhibits the effect that unevenness in time required for gear shifts can be suppressed so as to effectively reduce a sense of incompatibility, which would have been given to a driver, and thus is useful in that it can be contribute to realization of a vehicle having a comfortable driving feeling.

### Reference Numerals List

- 10:: Engine
- 20:: Dual-clutch device
- 21:: First clutch
- 22:: Second clutch
- 30:: Transmission mechanism
- 31:: First input shaft
- 32:: Second input shaft
- 33:: Output shaft
- 34:: Subsidiary shaft
- 40:: Subsidiary transmission
- 41:: First primary gear train
- 42:: Second primary gear train
- 50:: Main transmission
- 51:: 1/2 stage gear train
- 52:: 3/4 stage gear train
- 53:: 5/6 stage gear train
- 54:: Reverse gear train
- 60:: Synchronization mechanism
- 80:: Control unit
- 90:: Sensor of rotation speed of engine
- 95:: Vehicle speed sensor

## Claims

1. A dual-clutch transmission, comprising:
a clutch device (20) having first and second clutches (21, 22) capable of connecting or disconnecting power from a driving source (10);
a first input shaft (31) connected to the first clutch (21);
a second input shaft (32) connected to the second clutch (22);
a subsidiary shaft (34) arranged parallel to the first and second input shafts (31, 32);
an output shaft (33) arranged parallel to the subsidiary shaft (34);
a first primary gear train (41) that transmits power from the first input shaft (31) to the subsidiary shaft (34);
a secondary primary gear train (42) that transmits power from the second input shaft (32) to the subsidiary shaft (34);
a plurality of output gear trains (51, 52, 53) rotatably provided on the subsidiary shaft (34) and the output shaft (33); and
a synchronization mechanism for synchronously joining the output gear trains (51, 52, 53);
wherein a first gear-shift stage is set when the first clutch (21) is in a connecting state and the second clutch (22) is in a disconnecting state by the clutch device (20) in a state where one of the output gear trains is synchronously joined by the synchronization mechanism,
wherein an upshifting to a second gear-shift stage, which is one stage higher than the first gear-shift stage, is performed when the first clutch (21) is changed to a disconnecting state and the second clutch (22) is changed to a connecting state by the clutch device (20) in a state where the one of the output gear trains is synchronously joined by the synchronization mechanism,
wherein an upshifting to a third gear-shift stage, which is one stage higher than the second gear-shift stage, is performed when the first clutch (21) is changed to the connecting state and the second clutch (22) is changed to the disconnecting state by the clutch device (20) in a state where another output gear train different from the one of the output gear trains is synchronously joined by the synchronization mechanism, and
wherein a step ratio upon gear shift from the second gear-shift stage to the third gear-shift stage is set to be smaller than a step ratio upon gear shift from the first gear-shift stage to the second gear-shift stage.

2. The dual-clutch transmission according to claim 1, wherein an interstage ratio obtained by dividing a gear ratio of the first primary gear train (41) by a gear ratio of the second primary gear train (42) is set to be larger than an interstage ratio which causes step ratios upon gear shifts to become the same.

## Patentansprüche

1. Doppelkupplungsgetriebe, umfassend:
eine Kupplungsvorrichtung (20), die eine erste und eine zweite Kupplung (21, 22) aufweist, die in der Lage sind, die Leistung von einer Antriebsquelle (10) zu verbinden oder zu trennen;
eine erste Eingangswelle (31), die mit der ersten Kupplung (21) verbunden ist;
eine zweite Eingangswelle (32), die mit der zweiten Kupplung (22) verbunden ist;
eine Nebenwelle (34), die parallel zu der ersten und der zweiten Eingangswelle (31, 32) angeordnet ist;
eine Ausgangswelle (33), die parallel zu der Nebenwelle (34) angeordnet ist;
einen ersten Primärgetriebezug (41), der Leistung von der ersten Eingangswelle (31) auf die Nebenwelle (34) überträgt;
einen zweiten Primärgetriebezug (42), der Leistung von der zweiten Eingangswelle (32) auf die Nebenwelle (34) überträgt;
eine Mehrzahl von Ausgangsgetriebezügen (51, 52, 53), die drehbar auf der Nebenwelle (34) und der Ausgangswelle (33) vorgesehen sind; und
einen Synchronisationsmechanismus zur synchronen Verbindung der Ausgangsgetriebezüge (51, 52, 53);
wobei, wenn sich die erste Kupplung (21) in einem Verbindungszustand befindet und die zweite Kupplung (22) sich in einem Trennungszustand befindet, eine erste Gangschaltstufe durch die Kupplungsvorrichtung (20) in einem Zustand eingestellt wird, in dem einer der Ausgangsgetriebezüge durch den Synchronisationsmechanismus synchron verbunden ist,
wobei ein Hochschalten in eine zweite Gangschaltstufe, die eine Stufe höher als die erste Gangschaltstufe ist, durchgeführt wird, wenn die erste Kupplung (21) in einen trennenden Zustand geändert wird und die zweite Kupplung (22) in einen verbindenden Zustand geändert wird, durch die Kupplungsvorrichtung (20) in einem Zustand, in dem der eine der Ausgangsgetriebezüge durch den Synchronisationsmechanismus synchron verbunden ist, in einen verbindenden Zustand geschaltet wird,
wobei ein Hochschalten in eine dritte Gangschaltstufe, die eine Stufe höher als die zweite Gangschaltstufe ist, durchgeführt wird, wenn die erste Kupplung (21) in den verbindenden Zustand geändert wird und die zweite Kupplung (22) in den trennenden Zustand geändert wird, durch die Kupplungsvorrichtung (20) in einem Zustand, in dem ein anderer Ausgangsgetriebezug, der sich von dem einen der Ausgangsgetriebezüge unterscheidet, durch den Synchronisationsmechanismus synchron verbunden wird, und
wobei ein Stufenverhältnis bei der Gangschaltung von der zweiten Gangschaltstufe in die dritte Gangschaltstufe so eingestellt ist, dass es kleiner als ein Stufenverhältnis bei der Gangschaltung von der ersten Gangschaltstufe in die zweite Gangschaltstufe ist.

2. Doppelkupplungsgetriebe nach Anspruch 1, wobei ein Zwischenstufenverhältnis, das durch Dividieren eines Übersetzungsverhältnisses des ersten Primärgetriebezuges (41) durch ein Übersetzungsverhältnis des zweiten Primärgetriebezuges (42) erhalten wird, so eingestellt wird, dass es größer als ein Zwischenstufenverhältnis ist, das bewirkt, dass die Stufenverhältnisse beim Schalten gleich werden.

## Revendications

1. Transmission à double embrayage, comprenant :
un dispositif d'embrayage (20) ayant un premier et un second embrayages (21, 22) capables de connecter ou de déconnecter de la puissance d'une source de direction (10) ;
un premier arbre d'entrée (31) connecté au premier embrayage (21) ;
un second arbre d'entrée (32) connecté au second embrayage (22) ;
un arbre subsidiaire (34) disposé parallèlement aux premier et second arbres d'entrée (31, 32) ;
un arbre de sortie (33) disposé parallèlement à l'arbre subsidiaire (34) ;
un premier train d'engrenage primaire (41) qui transmet de la puissance du premier arbre d'entrée (31) à l'arbre subsidiaire (34) ;
un train d'engrenage primaire secondaire (42) qui transmet de la puissance du second arbre d'entrée (32) à l'arbre subsidiaire (34) ;
une pluralité de trains d'engrenage de sortie (51, 52, 53) fournis de manière rotative sur l'arbre subsidiaire (34) et l'arbre de sortie (33) ; et
un mécanisme de synchronisation pour joindre de manière synchrone les trains d'engrenage de sortie (51, 52, 53) ;
un premier stade de glissement d'engrenage étant réglé quand le premier embrayage (21) est dans un état de connexion et que le second embrayage (22) est dans un état de déconnexion par le dispositif d'embrayage (20) dans un état où un des trains d'engrenage de sortie est joint de manière synchrone par le mécanisme de synchronisation,
une élévation à un second état de glissement d'embrayage, qui est un stade supérieur au premier stade de glissement d'embrayage, étant effectuée quand le premier embrayage (21) est changé en un état de déconnexion et que le second embrayage (22) est changé en un état de connexion par le dispositif d'embrayage (20) dans un état où l'un des trains d'engrenage de sortie est joint de manière synchrone par le mécanisme de synchronisation,
une élévation à un troisième glissement d'engrenage, qui est un stade supérieur au deuxième stade de glissement d'embrayage, étant effectué quand le premier embrayage (21) est changé en l'état de connexion et le second embrayage (22) est changé en l'état de déconnexion par le dispositif d'embrayage (20) dans un état où un autre train d'engrenage de sortie différent de l'un des trains d'engrenage de sortie est joint de manière synchrone par le mécanisme de synchronisation, et
un rapport d'étape sur le glissement d'engrenage du deuxième stade de glissement d'engrenage au troisième stade de glissement d'engrenage étant réglé pour être plus petit qu'un rapport d'étape sur le glissement d'engrenage du premier stade de glissement d'engrenage au deuxièmes stade de glissement d'engrenage.

2. Transmission à double embrayage selon la revendication 1, dans laquelle un rapport d'interstade obtenu en divisant un rapport d'engrenage du premier train d'engrenage primaire (41) par un rapport d'engrenage du second train d'engrenage primaire (42) est réglé pour être plus grand qu'un rapport d'interstade qui entraîne les rapports d'étape sur les glissements d'embrayage à devenir identiques.
